(19)

Europäisches
Patentamt
European
Patent Office
Office européen
des brevets

(11) **EP 4 020 352 A1**

(12) **EUROPEAN PATENT APPLICATION**

(43) Date of publication:
**29.06.2022 Bulletin 2022/26**

(21) Application number: **21215045.2**

(22) Date of filing: **16.12.2021**

(51) International Patent Classification (IPC):
**G06Q 10/06** *(2012.01)*

(52) Cooperative Patent Classification (CPC):
**G06Q 10/06**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.12.2020 US 202017131365**

(71) Applicant: **Mursion, Inc.
San Francisco, CA 94115 (US)**

(72) Inventors:
• **NAGENDRAN, Arjun
San Mateo, 94403 (US)**
• **COMPTON, Scott
Carrboro, 27510 (US)**
• **FOLLETTE, William C.
Verdi, 89439 (US)**

(74) Representative: **Herzog, Markus
Weickmann & Weickmann
Patent- und Rechtsanwälte PartmbB
Postfach 860 820
81635 München (DE)**

(54) **SYSTEM AND METHODS FOR EVALUATION OF INTERPERSONAL INTERACTIONS TO PREDICT REAL WORLD PERFORMANCE**

(57) Aspects of systems and methods for evaluation of interpersonal interactions to predict real world performance are disclosed. In an example, a system includes an input device, a memory storing instructions, and a processor communicatively coupled with the input device and the memory. The processor is configured to receive ratings data corresponding to a first user from the input device indicating an assessment of the first user during an interpersonal interaction. The processor is configured to evaluate the ratings data corresponding to the first user in comparison to ratings data corresponding to a plurality of rated users. The processor is configured to output a result of the evaluated ratings data indicating a performance of the first user during the interpersonal interaction.

EP 4 020 352 A1

**Description**

## TECHNICAL FIELD

The present disclosure relates to computing systems, and more particularly, to systems and methods for evaluation of interpersonal interactions to predict real world performance.

## BACKGROUND

The animation of virtual characters is provided by computing systems in a variety of industries, such as the film industry, advertising, computing gaming, medical applications, and education, among others. In some virtual environments, virtual characters interact with each other and/or with objects within the virtual environments for users to receive immersive and interactive experiences. Additionally, these experiences may assist users with receiving educational and training experiences to develop psychologically, mentally, and socially. However, there is a need in the art for improvements to these interactive experiences.

## SUMMARY

The following presents a simplified summary of one or more implementations of the present disclosure in order to provide a basic understanding of such implementations. This summary is not an extensive overview of all contemplated implementations, and is intended to neither identify key or critical elements of all implementations nor delineate the scope of any or all implementations. Its sole purpose is to present some concepts of one or more implementations of the present disclosure in a simplified form as a prelude to the more detailed description that is presented later.

In an aspect, a system is provided herein. The system may include an input device, a smemory storing instructions, and one or more processors communicatively coupled with the input device and the memory. In an example, the one or more processors is configured to receive ratings data corresponding to a first user from the input device indicating an assessment of the first user during an interpersonal interaction. The one or more processors is also configured to evaluate the ratings data corresponding to the first user in comparison to ratings data corresponding to a plurality of rated users. The one or more processors is also configured to output a result of the evaluated ratings data indicating an evaluation of the first user during the interpersonal interaction.

In another aspect, a method for evaluation of interpersonal interactions to predict real world performance is provided. The method may include receiving ratings data corresponding to a first user from a input device indicating an assessment of the first user during an interpersonal interaction. The method may also include evaluating the ratings data corresponding to the first user in comparison to ratings data corresponding to a plurality of rated users. The method may also include outputting a result of the evaluating indicating an evaluation of the first user during the interpersonal interaction.

In another aspect, a computer-readable medium storing executable code for executing on one or more processors is provided. The computer-readable medium may include code to receive ratings data corresponding to a first user from an input device indicating an assessment of the first user during an interpersonal interaction. The computer-readable medium may also include code to evaluate the ratings data corresponding to the first user in comparison to ratings data corresponding to a plurality of rated users. The computer-readable medium may also include code to output a result of the evaluated ratings data indicating an effectiveness of the first user during the interpersonal interaction.

Additional advantages and novel features relating to implementations of the present disclosure will be set forth in part in the description that follows, and in part will become more apparent to those skilled in the art upon examination of the following or upon learning by practice thereof.

## DESCRIPTION OF THE FIGURES

In the drawings:

FIG. 1 is a block diagram of an example system, according to aspects of the present disclosure;
FIG. 2 is a diagram of an example ratings graph, according to aspects of the present disclosure;
FIG. 3 is a graph illustrating ratings data, according to aspects of the present disclosure;
FIG. 4-7 are graphs illustrating examples of data correlation performed by the system of FIG. 1, according to aspects of the present disclosure;
FIGS. 8-9 are diagrams illustrating score correlations performed by the system of FIG. 1, according to aspects of the present disclosure;
FIG. 10 is a flowchart of an example method performed by the system of FIG. 1, according to aspects of the present disclosure;

FIG. 11 is a block diagram of additional components of the system of FIG. 1, according to aspects of the present disclosure; and

FIG. 12 is a block diagram of various example system components, according to aspects of the present disclosure.

## DETAILED DESCRIPTION

Simulations may be used to help individuals receive confidence in certain situations, learn to manage the situations, and help organizations identify characteristics of individuals. However, many simulations only focus on a general outcome of the simulation, thereby not providing particular or significant help to the individuals or organizations to make improvements.

Aspects of the present disclosure provide systems and methods for evaluation of interpersonal interactions to predict real world performance to identify and improve specific characteristics of individuals during specific situations through the use of simulations. In an example, a system includes an input device, a memory storing instructions, and a processor communicatively coupled with the input device and the memory. The processor is configured to receive ratings data corresponding to a first user from the input device indicating an assessment of the first user during an interpersonal interaction. The processor is configured to evaluate the ratings data corresponding to the first user in comparison to ratings data corresponding to a plurality of rated users. The processor is configured to output a result of the evaluated ratings data indicating a performance of the first user during the interpersonal interaction.

Turning now to the figures, examples of systems and methods of the present disclosure are depicted. It is to be understood that aspects of the figures may not be drawn to scale and are instead drawn for illustrative purposes.

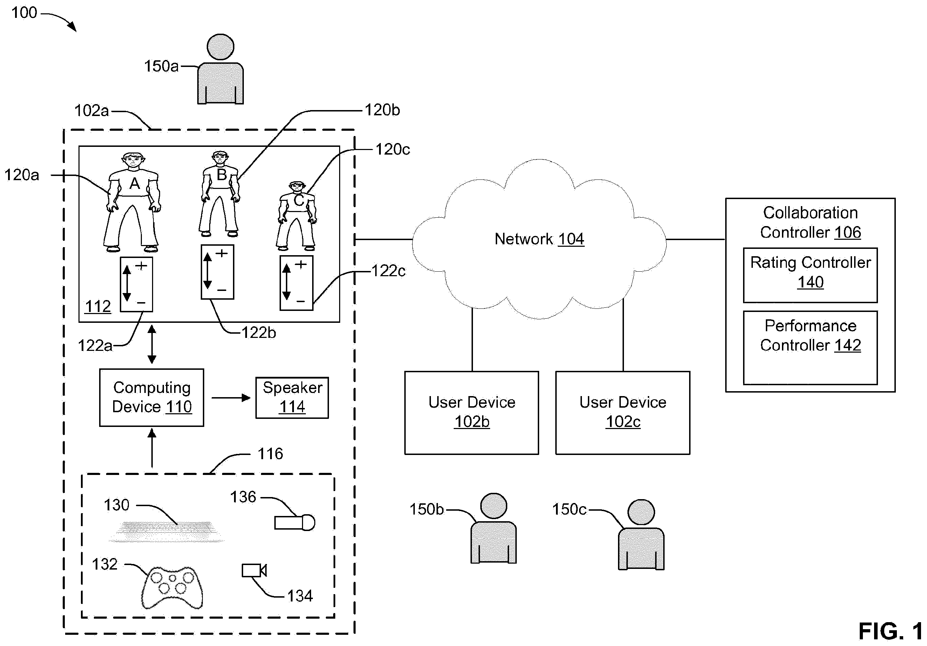

FIG. 1 includes an example interactive system 100 for performance evaluations during interpersonal interactions, according to aspects of the present disclosure. In an example, the interactive system 100 includes a plurality of user systems 102 (e.g., user systems 102a-102c) communicatively coupled with each other and a collaboration system 106 via a network 104. The network 104 may be a wired and/or a wireless network, and may include any combination of intranet, local area networks (LANs), enterprise-wide networks, medium area networks, wide area networks (WANs), the Internet, cellular networks, and the like to allow communication within the interactive system 100.

In an example, the user system 102a may include a computing device 110 for communicating with other interactive systems (e.g., user systems 102b and 102c) and the collaboration system 106. Examples of the computing device 110 may include, but are not limited to, a personal computer, a mobile device, a tablet, or any other device having capabilities described herein.

The computing device 110 may include a display 112 for displaying an interpersonal interaction between a user 150a of the user system 102a and one or more other users such as users 150b and 150c of the other user systems 102a and 102b. In an example, the user system 102a may be used for audio/video conferencing between the users 150 such that the user 150a may see via the display 112 and hear via a speaker 114 the other users 150b and 150c. In another example, the user system 102b may be used as a simulation such that virtual characters 120a-120c corresponding to the users 150a-150c are displayed by the display 112 and the audio of the users 150b and 150c are heard via the speaker 114. The user 150a may control actions of the virtual character 120a by interfacing with one or more input devices 116. Examples of an input device 116 include, but are not limited to, the display 112 (e.g., a touchscreen display), a keyboard 130, a hand controller 132, a camera 134, a microphone 136, or any other input device configured to receive input for controlling the virtual characters or perform other input functions described herein.

The user systems 102b and 102c may include the same hardware and functionality as user system 102a.

In an aspect, the collaboration system 106 is configured to receive data from the user systems 102a-102c during an interpersonal interaction, record the data, and analyze the data to produce output, as described herein. In an example, the collaboration system 106 includes a ratings controller 140 configured to analyze data received from the user systems 102a-102c and to generate ratings output such a rating graph or other output data. The collaboration system 106 may also include a performance controller 142 configured to analyze the output data from the ratings controller 140 and generate a performance score (e.g., social effectiveness score) including a score that indicates effectiveness, rapport, skill, etc. of users of the system 100. In an aspect, the performance score may correlate to any real-world performance metric for a user 150, thereby the performance score may predict an impact of the user 150 on any real-world performance.

In an aspect, during interpersonal interactions or group discussions, any user 150 may rate any other user 150 in the system 100 in real time. The rating may be used to compute the perfomance score of each user 150 with respect to everyone else present in the system 100. As an example, the user 150a may rate interaction impact of one or more of the other users 150b or 150c on themselves or others. For example, using one or more of the input devices 116, the user 150a may provide a positive rating or a negative rating using a rating interface 122 (e.g., rating interface 122a-122c) corresponding to the users 150a-150c. For example, the computing device 110 may receive input indicating the user 150a pressed the up arrow key on the keyboard 130 to indicate a positive rating and the down arrow key on the keyboard 130 to indicate a negative rating corresponding to interactions of one of the users 150a-150b with the other users. In other words, a user 150 may rate other users 150 and/or himself/herself.

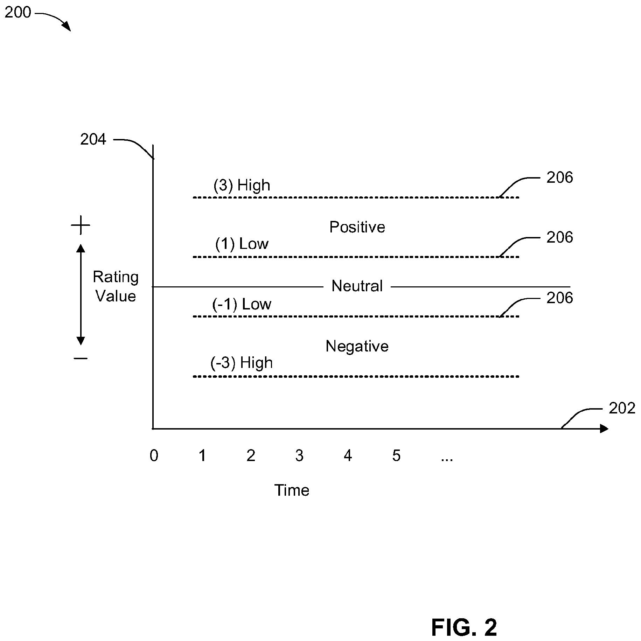

Rating data from the rating interface 122 may be continuously time stamped during the interaction between users 150 and may be discretized onto a rating scale 200, as shown in FIG. 2, by the collaboration system 106. The collaboration system 106 may also provide a time-series, as described in more details herein, that complements an axis of the rating scale 200 so that rating values may be interpreted at any specific time instant. The collaboration system 106 may also include storage to record the rating data and time stamps.

In an aspect, the timestamped values of impact (positive, negative, or neutral) may provide reference points and time windows within which audio data and video data of an interaction may be analyzed. Rating values may also act as labels for the audio data and video data. For example, any audio event or visual event that occurred at any time instant during the interaction may be provided with a label of, for example, positive, negative, or neutral, in accordance with the chosen rating scale.

In aspect, the collaboration system 106 may use the rating data and time data to generate the rating scale 200. The rating scale 200 may be represented on a vertical axis or a horizontal axis of a graphical display, which may be shown via any suitable output device, for example, the display 112, another display device, or a printer. In an example, the rating scale 200 may show time along a time axis 202 (e.g., horizontal axis) and rating values along a rating axis 204 (e.g., vertical axis). The rating scale 200 may be divided into a plurality of bands 206 to represent positive impact, neutral impact, negative impact, or any numeric variation thereof. Rating values may be provided over the entire duration of the interaction or any portion(s) thereof and time stamped so that rating values may be discerned for any time instant of the interaction. Ratings values from the input device 116 of FIG. 1 may be discretized into positive, negative, and neutral bands or sampled using interpolation. Time may include the duration of the interaction between the users 150 (humans and/or avatars). In some examples, the time may be in milliseconds (ms) and/or include a multiplier (e.g., times $10^3$), although other time scales may be used.

Audio data and/or video data (e.g., from camera 134 and/or of virtual characters 120) may also be collected separately and sent to the collaboration system 106. The collected data may be time-stamped for synchronization with rating data (e.g., rating values). In this manner, the rating data at any time instant may be correlated with the audio data and video data to extract a relationship between them. The time stamped values of impact (positive, negative, or neutral) may provide reference points and time windows within which the audio data and video data may be analyzed. The rating values may also act as labels for the audio data and video data; that is, any audial event or visual event that occurred at any time instant in the interaction may have a label of being positive, negative, or neutral in accordance with a chosen rating scale. For example, a positive impact discerned at a specific time instant in the rating scale may correlate to a person smiling in the video stream around the same instant or a person exhibiting warmth in the tone and pitch of their voice while saying "Thank you."

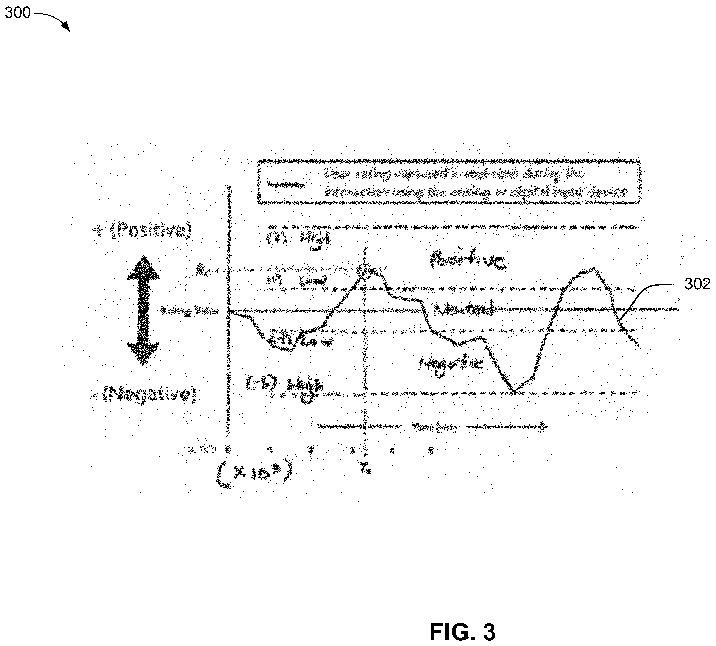

In an example, each user 150 may operate a respective user system 102 to track the impact of any speaker on any listener in the system. For example, the user system 102a receive input to track an impact of the user 150c on the user 150a, resulting in, for example a graph, such as shown in FIG. 3. If the user system 102a received input to track the impact of both the user 150b and the user 150c on the user 150a, two separate graphs may be produced. In addition, the user system 102a may receive input to track an impact of the user 150a on the user 150b, resulting in three graphs. Accordingly, the input device 116 may include multiple input elements or switches so that a user may select which user to track and rate.

In another example, the interactive system 100 may be used in a virtual simulation. Thus, as the users 150 interact with the virtual characters 120, each of the user systems 102 may receive input to track the impact of any virtual character 120 on any user 150. For instance, the user system 102a may receive input to track an impact of the virtual character 120b on the virtual character 120a to generate, for example, rating data for a graph, and/or an impact of the virtual character 120c on the virtual character 120a to generate, for example, rating data for another graph.

Referring to FIG. 3, therein shown is an example rating graph 300 from the interactive system 100. As illustrated, the solid line represents rating data 302 captured in real time during an interaction based on input from the input device 116. The rating value Rn at time Tn of the interaction between two users 150 (or one human and one avatar) may be determined from the rating graph 300, and the time Tn at which the rating value Rn was received may also be determined. Moreover, rating data may be discretized into the positive, negative, or neutral bands as shown, or sampled using interpolation, thereby supporting both digital and analog input.

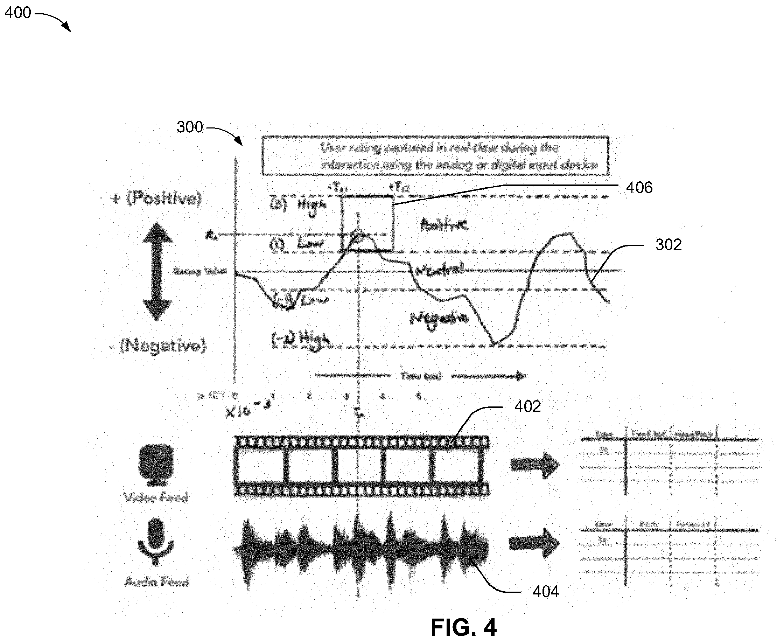

Referring to FIG. 4, a conceptual diagram 400 of an example correlation between audio data, video data, and rating values, is illustrated. Based on the rating graph 300 from FIG 3, the rating data 302 may be synchronized with the audio data and the video captured in real time during the interaction. For example, a video feed 402 and an audio feed 404 are also illustrated below the rating graph 300. Corresponding to the rating value Rn at time Tn of the interaction, synchronized data from the video feed 402 and the audio feed 404 may be analyzed. Extracted visual features from the video frames (such as head roll, head pitch) of the video feed 402 and audio features from audio waveforms (such as pitch, formants) of the audio feed 404 in a temporal window 406 around a time interest Tn may be correlated to the rating value Rn to learn if and how verbal communications and non-verbal communications affect interpersonal conversation.

In an aspect, the times -Ts1 and +Ts2 may define the temporal window 406 around the time of interest Tn that may be used for piece-wise analysis of the audio data and the video data. the times -Ts1 and +Ts2 may be chosen arbitrarily but may be optimized depending on the context of the simulation, since varying values yield varied results for analysis. In an example, several windows of analysis may be used to determine the optimal value for the specific context. For example, when causal data is required, the temporal window 406 may be chosen such that -Ts1 corresponds to Tn and +Ts2 is dependent on the time duration for which the effect of the past event needs to be analyzed.

The video data, the audio data, the rating data, and analyzed data may be stored by the computing device 110. In an example, the audio data and the video data may each be pre-processed before integration with the ratings data. For example, the audio channel of each user system 102 may be recorded and the data saved to any suitable storage device.

In an example, for each recorded audio channel, the collaboration system 106 may compute the Fast Fourier Transform of the recorded audio signal to determine the frequency components of the signal. The collaboration system 106 may also perform an acoustic periodicity detection using an autocorrelation technique or any other suitable technique or method. This may be utilized to distinguish voices from other sounds and also to distinguish between vocal signatures and features. The recorded signal may then be analyzed by the collaboration system 106 at a suitable sampling rate, for example, by sampling at 1000 Hz (time interval of 1 ms) for desired audio features, such as, without limitation, a pitch of voice, tone of voice, vocal intensity level, vocal formant, voiced segment, unvoiced segment, voice break, silence period, vocal jitter, or vocal shimmer, or a combination thereof.

The extracted features (values) of the audio signal, which were previously time stamped, may be recorded and stored for further processing by the collaboration system 106. This may yield a multi-dimensional time-series vector, sampled, for example, every 10 ms. Extracted pure audio features may include, without limitation: median pitch, mean pitch, SD pitch, maximum pitch, minimum pitch, local jitter, local absolute jitter, RAP jitter, PPQ5 jitter, DDP jitter, local shimmer, local DB shimmer, APQ3 shimmer, APQ5 shimmer, APQ11 simmer, DDA simmer, fraction unvoiced frames, number of voice breaks, degree of voice breaks, mean intensity, minimum intensity, maximum intensity, first formant, second formant, third formant, fourth formant.

The extracted values may be provided, for example, as a table or spread sheet, by the collaboration system 106 to any of the user systems 102 and/or another device (e.g., email, text) in which columns represent various features in the audio signal and the rows correspond to those values extracted in specific time windows. For example, row 1 may be 0 to 10ms and row 2 may be 10ms to 20ms, if the time window chosen was 10ms (-Ts1 to +Ts1).

Sample features or values may include, for example, emotions, and or derived features. Emotions may include, for example, neutrality, happiness, sadness, anger, or fear. Derived features may include, for example, number of syllables, number of pauses, duration (e.g., seconds), phonation time(s), speech rate (e.g., number of syllables/duration), or articulation rate (e.g., number of syllables/phonation time).

For each dimension of the multi-dimensional time-series vector, the time-stamped data may be saved by the collaboration system 106. The collaboration system 106 may also compute an autocorrelation between all the recorded audio signals from each of the users 150 based on the following:

$$\rho(A,B) = 1/(N-1) * sigma(i = 1:N)[(Ai - \mu A)/(\sigma A) * (Bi - \mu B)/(\sigma B)]$$

where: A and B are column vectors corresponding to one of the above time-stamped values; p(A,B) is the correlation coefficient between the two values A and B; N is the number of observations corresponding to the number of rows in that column; $\mu$ is the mean value for each of features A and B; and $\sigma$ is the standard deviation for each of features A and B.

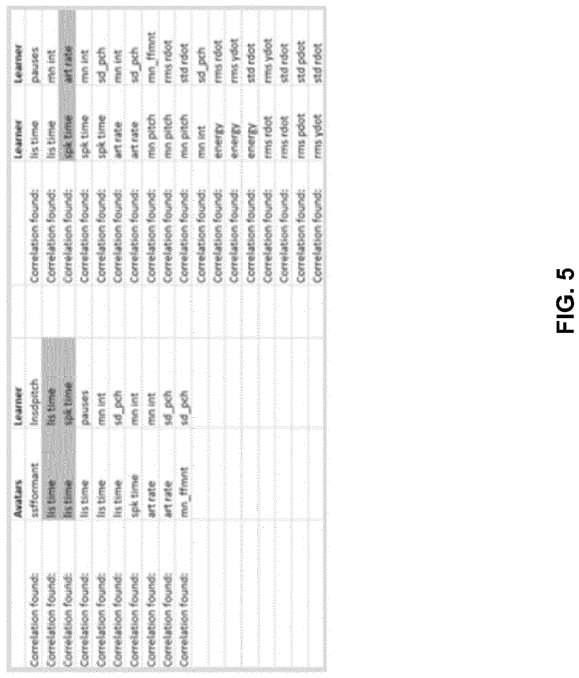

The collaboration system 106 may also find the dimensions of the data where correlations are found, for example, statistically, where the statistical probability value, p-value, is less than a determined threshold value (e.g., $p < 0.05$ or $p < 0.10$). An example is shown in FIG. 5, where the correlations found between the recorded audio of a virtual character 120 (e.g., user 150a) and the recorded audio of a learner (e.g., user 150b) are shown on the left. The same computation between two learners is shown on the right. It will be appreciated that the results shown in FIG. 5 may be only examples, and results may vary across datasets and are not generalizable results. By way of example, listening times and speaking times may be computed by summating the periods of the audio signal in which the frequency components have been identified as voiced segments. There are known algorithms included in certain toolkits, such as PRAAT, that facilitate the computation of these values.

The left three columns show the correlation between features that were extracted for a virtual character 120, and the features extracted for a user 150, for one specific dataset. Two rows are highlighted as an example. These two rows suggest that a direct correlation exists between the "listening time" of the virtual character 120 (i.e., the time the virtual character 120 spends listening to a user 150) and the "listening time" of the user (i.e., the time the user 150 spends listening to the virtual character 120). In other words, the inference is that the longer the user 150 listens to the virtual character 120, the longer the virtual character 120 is likely to listen to the user 150, and vice-versa. Similarly, a correlation exists between the "listening time" of the virtual character 120 and the "speaking time" of the user 150. That is, it may be inferred that the virtual character 120 was willing to listen more, if the user 150 spent time talking.

The right three columns illustrate a similar analysis, this time performed between the users 150 themselves rather than between the virtual characters 120 and the users 150. The highlighted row indicates that there is a correlation between the "speaking time" of the users 150 and their "articulation rate." The computed articulation rate of the user 150 is the number of syllables per minute that were uttered by the user 150, which may be obtained by analyzing the raw audio streams, as noted above. In some embodiments, the above computation of correlation may be performed across the entire duration of the interaction, and across all audio streams.

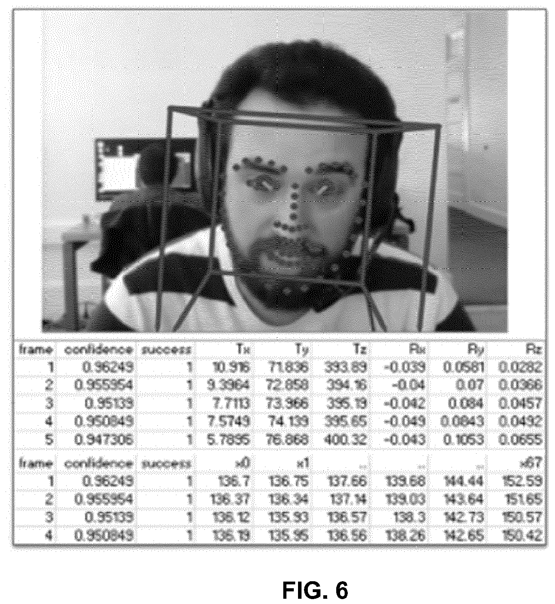

In an aspect, pre-processing of the video data may be performed. For example, the video channel of each user system 102 may be recorded and the data saved by the collaboration system 106. In an example, the video data may be sampled at a rate between 30 to 60 Hz. In an example, for each recorded video channel, the collaboration system 106 may employ head pose and facial landmark detectors, based on trained neural networks or the like. Any suitable head pose and facial landmark detector may be used, such as Cambridge Face Tracker or OpenCV. The system may compute the head pose data [Rx, Ry, Rz] (rotation) and [Tx, Ty, Tz] (position) for each frame of the video. Referring to Fig. 6, Tx, Ty and Tz are the absolute positional values of the head of the learner in three dimensions with respect to the world-frame of the sensor (or video input device). Rx, Ry and Rz are the absolute rotational values of the head of the learner (roll, pitch, and yaw) as observed by the sensor.

Similarly, facial landmark features such as, without limitation, eyebrow positions, nose tip position, eye position, lip position, facial contour positions, head shape, and hair line, may be computed for each frame, and each facial feature may be appropriately indexed. For example, each eyebrow may be labeled at five points from the inside, near the nose bridge, to the outside, near the ear, identified as eyebrow_1, eyebrow_2, ... eyebrow_5. Similarly, the lip may be labeled at points including the lip corners, upper lip middle, and lower lip middle. Face contour points may similarly be labeled and indexed.

This data may be stored by the collaboration system 106 as a time-stamped row vector for each frame. The dimensionality of this row of data is dependent on the number of features detected in that frame and in some embodiments, may be as large as, for example, 67 points on the face. A confidence value (which may be provided by the head pose and facial landmark detection system) may also be stored for each frame. Data points with low confidence values, for example, < 90%, may be discarded.

For each video stream, the root-mean-square (RMS) value of the angular velocity of the motion of the head (roll, pitch and yaw) may be computed by the collaboration system 106 and used as a derived feature. The autocorrelation between the computed RMS values for all the recorded video signals from all the different end users (peers) including any avatars in the scene may be computed. The time-stamped data of all the extracted values (RMS, head pose and facial landmarks) may be saved by the collaboration system 106.

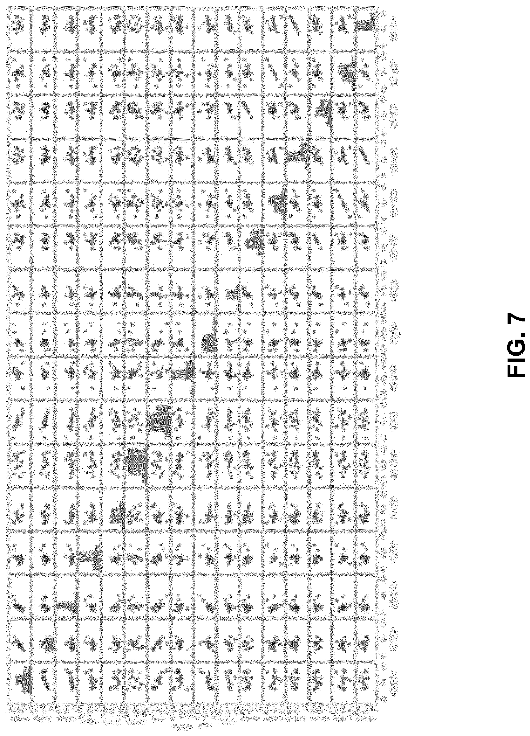

Referring to FIG. 7, a graphical illustration of data of an example correlation matrix is depicted. Each row and column corresponds to one of several features extracted from the audio or video streams by the collaboration system 106. The matrix may include both audio features and video features wherein each may correlate to the other. For example, the pitch of the voice of a person may increase while exhibiting, or after exhibiting, an angry face. For example, audio features extracted from the audio stream may include pitch of voice, tone of voice, mean intensity level, formants and the like. Visual features extracted from the video stream may include the location of facial landmarks such as the tip of the nose, eyes, mouth, direction of the head, direction of eye gaze, and the like. Each cell in the matrix (each intersection of a row and column) contains as many data points as the number of interactions on which the analysis is performed. Increasing the number of interactions should increase the number of resulting correlations. For example, if 15 interactions are analyzed, there are 15 data points in each cell, each corresponding to 1 of the interactions. If a correlation is found between these 15 points in a cell, then the associated row and column indicate the features that have a correlation across the entire data set of 15 interactions.

Correlations may be performed by the collaboration system 106 without relying on the ratings data or the data may be analyzed in the time windows around the ratings. Correlations may be either independent of timing information or dependent on such information.

The rating graph 300 of FIG. 3 may then be used to provide time windows for further analysis of the audio and video data. For example, the data from the rating graph 300 may already be synchronized with the audio and video signals, as described above. The ratings data for the particular interaction between learners may be divided into bands of positive, neutral and negative as described above. The continuous rating scale may allow discrete bands of any magnitude to be created. For example, one positive band could be all ratings that are between 3.5 and 4.0. An alternate, but broader positive rating band could be all the ratings that lie between 2.0 and 4.0 and so on.

All the time-values Tn at which the rating Rn falls within the chosen limits of the rating band (as described in the previous stage) are extracted. These time-values serve as windows into the pre-processed audio and video data.

Time windows (e.g., temporal window 406) may be variable and may range from +Ts and -Ts on either side of the extracted time value Tn (see illustration above).

Variable correlation in the audio data and the video data may be solved for based on varying time windows obtained using, for example, the above-described procedure. Time windows and rating bands may each be varied during the analysis to identify patterns in the data that may be observed at selected time windows and rating amplitudes.

In some embodiments, the rating scale may be used as labels for machine learning. For example, variable correlations that exist in the positive, negative and neutral bands may be identified as indicators of patterns. For every value Rn that lies within a selected rating band, the audial and visual features (extracted as descried above) may be gathered into a large multi-dimensional dataset. Using the value Rn as a target label, a machine learning algorithm may be trained using decision trees or support vector machines. Other such machine learning techniques may be applied to train various models. Suitable models include, without limitation, neural networks and multi-layer perceptrons.

In some embodiments, the learnt model may be verified using cross-validation. Cross-validation uses the approach of dividing a data set into training and testing portions, where a portion of the data set (e.g. 70%) is used to train the model and the rest of the data (30%) is used to test the model. Parameters of the model may be refined based on the results and the data may be repartitioned randomly to perform iterative cross-validation until a good performance is achieved. Variations including n-fold validation. Other techniques known in the art may be used.

In an example, a model may be adapted and refined using active-learning, in which a rating scale may be used to continuously provide labels to a machine learning algorithm as the data is being gathered during interpersonal interactions.

In an aspect, a rating system may be used without corresponding audio and video data. In this case, the rating system may give users qualitative data by making them aware of the impact they had on the other person or people during an interaction. The users would not, however, know the cause of the impact in the absence of the audio and video data.

In an aspect, the audio and video hardware may be combined for recording, and the audio and video data may be later separated in software for analysis.

In an aspect, a rating interface may be used to collect data of a similar nature during in-person meetings and conferences. For example, examples of an interface may be adapted or customized as an app on a smart phone or other device to allow a user to input ratings while having a phone or in-person conversation or a video conference.

The performance controller 142 may receive data from the ratings controller 140 to generate a performance score for one or more of the users 150 corresponding to the interpersonal interactions. In an example, performance score is based on real-time ratings gathered in line with the data from the ratings controller 140. The performance controller 142 may use the performance score to provide potential recommendations or outcomes for the user 150. For example, the performance controller 142 may be used to recommend one or more job positions in an organization or groups in the organization that are suited for the user 150.

In an aspect, the performance controller 142 may utilize the ratings value from the users 150 as a subjective assessment as to whether or not the interpersonal interaction centered around a specific outcome was successful.

For example, the performance score may be used if a director at a company wants to convey news of a budget cut to a manager and explain why the budget for the manager is being cut instead of a budget for another manager. The outcome of the interpersonal interaction (i.e., conversation) may be for the manager to acknowledge understanding of and agreement with the rationale behind the decision by the director. Both the director and the manager may then be asked if the outcome of the conversation was achieved (e.g., was this a successful conversation).

The performance controller 142 may rely on a continuous assessment (or prediction) of the impact that each user 150 was having on another user 150 (positive, negative, or neutral). Based on the this data, the performance controller 142 may analyze the continuous data for one or more of following characteristics to generate the performance score: area under the graph of positive, neutral, and negative parts of the interpersonal interaction; total number of transitions from each state, to a different state (e.g. positive to neutral, positive to negative, negative to neutral and so on); and a weighting associated with each of these transitions, to signify the relevance of the state change.

In an example, usage of this data to calculate a person's performance score may be based on the following formula: MiScore = outcome_score + pos_time * pos_weight_fac + (neg_time * neg_weight_fac) + ((neu_time * neu_fact_1 - neu_fact_2)) + (pos_neg_count * pos_neg_factor) + (ratio val), where *outcome score* is a value chosen based on whether or not the interpersonal interaction was deemed a success by one or both parties in the conversation; *pos time* is a total area under the curve (time of interpersonal interaction) where one user 150 was deemed as having a positive impact on the other user 150; *pos_weight_fac* is the weight assigned to the positive impact, chosen based on the nature of the interpersonal interaction; *neg time* is the total area under the curve (time of interaction) where one user 150 was deemed as having a negative impact on the other user 150; *neg_weight_fac* is the weight assigned to the negative impact, chosen based on the nature of the interpersonal interaction; *neu time* is the total area under the curve (time of interaction) where one user 150 was deemed as having a neutral impact on the other user 150; *neu_fact_1* is a multiplicative weight assigned to the neutral impact, chosen based on the nature of the interpersonal interaction;

*neu_fact_2* is an optional offset weight applied to the neutral impact, chosen based on the nature of the interpersonal interaction; *pos neg count* is the number of times one user 150 was perceived to have changed state from having a positive impact on their counterpart to having a negative impact on their counterpart; *pos_neg_factor* is the weight associated with the transition between impact states, chosen based on the interpersonal interaction; and *ratio_val* is a value chosen based on the ratio between the number of times one changed states from positive to neutral or negative and the number of times once changed from negative to neutral or positive.

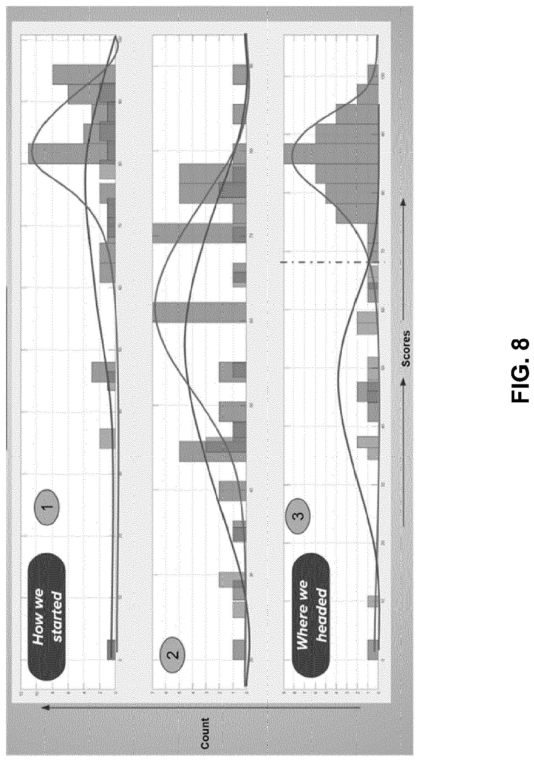

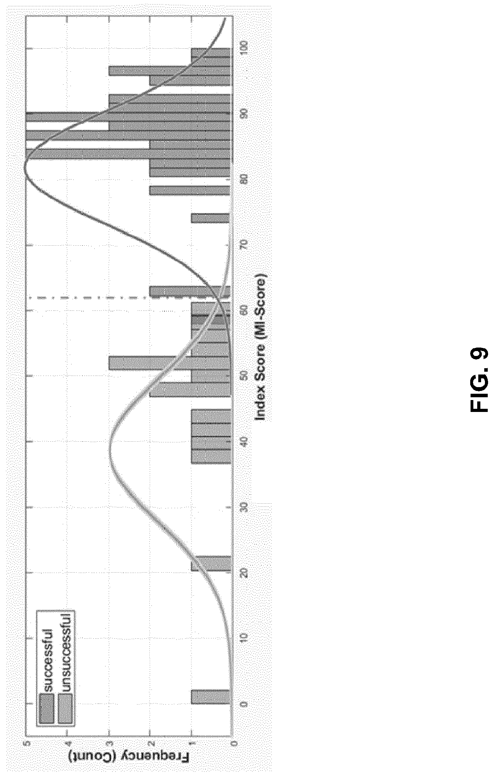

Use of the performance controller 142 based on the application of the data to generate the performance score described herein may create separation in the performance score for users 150 within each interpersonal interaction. Separation of data for the users 150 may be illustrated by FIGS. 8 and 9 which are indicative of various values described above with an end goal being to create clear separation between users 150. As the data is adjusted and more data is obtained, the end result is separation in individuals performance score, as illustrated by FIG. 9. Accordingly, with the right values, as described by the example algorithm above, the performance controller 142 is able to create uniform distributions for the users 150 in the interpersonal interaction based on the following characteristics: users 150 who achieved the outcome of a interpersonal interaction and did so really well (right end of blue graph); users 150 who achieved the outcome of a interpersonal interaction but did not do as well (left end of blue graph); users 150 who did not achieve the outcome of a interpersonal interaction but did really well (right end of orange graph); and users 150 who neither achieved the outcome of a interpersonal interaction nor did well (left end of orange graph).

In an aspect, the performance controller 142 may use machine learning to correlate computed data and scores to a number of real world aspects to predict the impact of a user on real-world performances. For example, the performance controller 142 may correlate the computed values of MiScore to real-world performance metrics and survey data such as NPS scores, Gallup Survey Scores, or other scores that are indicators of an Individual and/or a performance by an organization.

In an aspect, the performance controller 142 may correlate, using machine learning, the scores with individual and group simulation performance data such as vocal patterns, semantics, facial expressions, and other data collected during the interpersonal interactions.

In an aspect, the performance controller 142 may cluster individuals and organizations into groups based on their simulation performance, to create leaderboards or ranking patterns, using machine learning.

In an aspect, the performance controller 142 may predictively compute, using machine learning, the probability of success within an initial time frame (e.g., first few minutes) of a simulation performance based on historical data obtained during such interactions with other users.

In an aspect, the performance controller 142 may predictively suggest, using machine learning, whether or not a set of individuals are best-suited to be working in specific groups or teams based on the above algorithm.

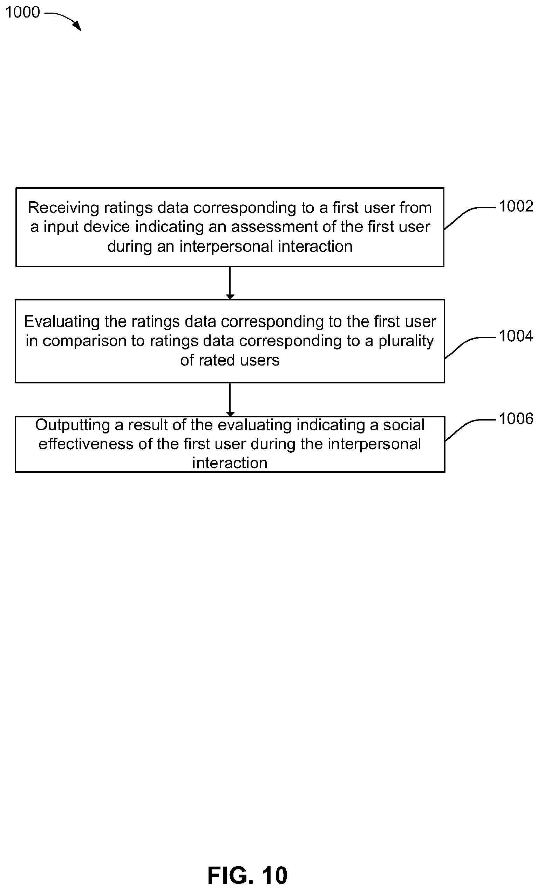

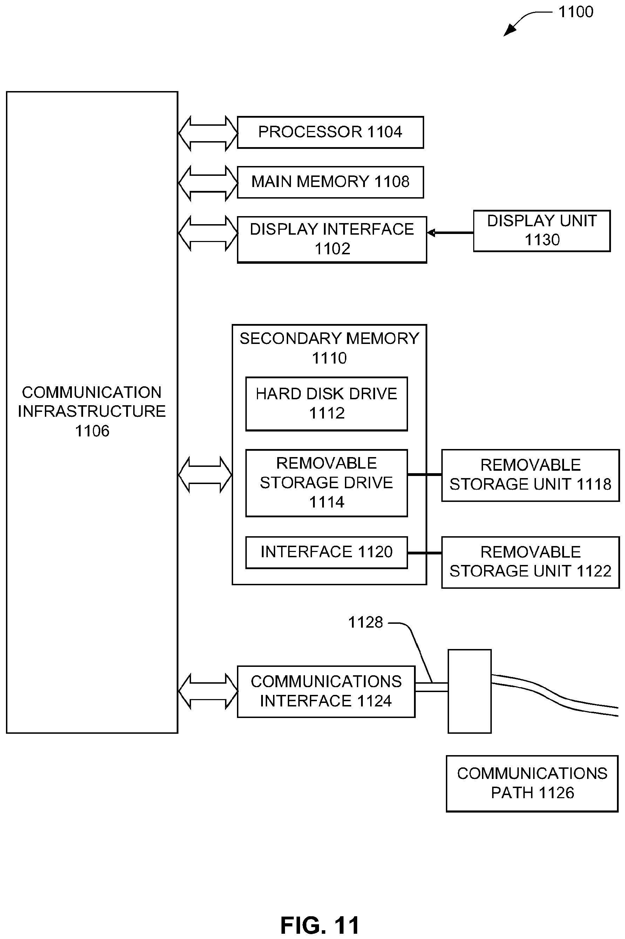

Referring to FIG. 10, an example method 1000 for performance evaluations during interpersonal interactions is depicted. In an example, the method 1000 may be performed by one or more components of the computer system 1100 of FIG. 11, which is an example of the collaboration system 106. Examples of some of the operations of the method 1000 may be described in relation to FIGS. 1-9.

At 1002, the method 1000 may include receiving ratings data corresponding to a first user from an input device indicating an assessment of the first user during an interpersonal interaction. For example, the collaboration system 106, the ratings controller 140, or the performance controller 142 may receive ratings data corresponding to the first user 150a from the input device 116, where the ratings data corresponds to an assessment or evaluation of the first user 150a during the interpersonal interaction between the users 150a-150c. In an example, the ratings data may include audio data and or video data corresponding to the interpersonal interaction.

At 1004, the method 1000 may include evaluating the ratings data corresponding to the first user in comparison to ratings data corresponding to a plurality of rated users. For example, the collaboration system 106 or the performance controller 142 may evaluate the ratings data corresponding to the first user 150a in comparison to ratings data corresponding to a plurality of rated users (e.g., users 150b-150c or previous users of the system 100). Based on the ratings data, the collaboration system 106 or the performance controller 142 may, for example, generate a performance score, as described herein.

At 1006, the method 1000 may include outputting a result of the evaluating indicating a performance of the first user during the interpersonal interaction. For example, the collaboration system 106 or the performance controller 142 may cause the performance score, a comparison of the performance score to other scores, or a recommendation for a job position or group within the organization to be displayed, sent as a message (e.g., text or email). or printed.

Aspects of the present disclosure may be implemented using hardware, software, or a combination thereof and may be implemented in one or more computer systems or other processing systems. In an aspect of the present disclosure, features are directed toward one or more computer systems capable of carrying out the functionality described herein. An example of such a computer system 1100 is shown in Figure 11. The computer system 1100 may be an example of the user system 102 or the collaboration system 106 of FIG. 1.

The computer system 1100 includes one or more processors, such as processor 1104. The processor 1104 is connected to a communication infrastructure 1106 (e.g., a communications bus, cross-over bar, or network). Various software aspects are described in terms of this example computer system. After reading this description, it will become apparent to a person skilled in the relevant art(s) how to implement aspects of the disclosure using other computer systems and/or architectures.

Computer system 1100 may include a display interface 1102 that forwards graphics, text, and other data from the communication infrastructure 1106 (or from a frame buffer not shown) for display on a display unit 1130. The computer system 1100 also includes a main memory 1108, preferably random access memory (RAM), and may also include a secondary memory 1110. The secondary memory 1110 may include, for example, a hard disk drive 1112, and/or a removable storage drive 1114, representing a floppy disk drive, a magnetic tape drive, an optical disk drive, a universal serial bus (USB) flash drive, etc. The removable storage drive 1114 reads from and/or writes to a removable storage unit 1118 in a well-known manner. Removable storage unit 1118 represents a floppy disk, magnetic tape, optical disk, USB flash drive etc., which is read by and written to removable storage drive 1114. As will be appreciated, the removable storage unit 1118 includes a computer usable storage medium having stored therein computer software and/or data.

Alternative aspects of the present disclosure may include secondary memory 1110 and may include other similar devices for allowing computer programs or other instructions to be loaded into computer system 1100. Such devices may include, for example, a removable storage unit 1122 and an interface 1120. Examples of such may include a program cartridge and cartridge interface (such as that found in video game devices), a removable memory chip (such as an erasable programmable read only memory (EPROM), or programmable read only memory (PROM)) and associated socket, and other removable storage units 1122 and interfaces 1120, which allow software and data to be transferred from the removable storage unit 1122 to computer system 1100.

Computer system 1100 may also include a communications interface 1124. Communications interface 1124 allows software and data to be transferred between computer system 1100 and external devices. Examples of communications interface 1124 may include a modem, a network interface (such as an Ethernet card), a communications port, a Personal Computer Memory Card International Association (PCMCIA) slot and card, etc. Software and data transferred via communications interface 1124 are in the form of signals 1128, which may be electronic, electromagnetic, optical or other signals capable of being received by communications interface 1124. These signals 1128 are provided to communications interface 1124 via a communications path (e.g., channel) 1126. This path 1126 carries signals 1128 and may be implemented using wire or cable, fiber optics, a telephone line, a cellular link, a radio frequency (RF) link and/or other communications channels. In this document, the terms "computer program medium" and "computer usable medium" are used to refer generally to media such as a removable storage unit 1118, a hard disk installed in hard disk drive 1112, and signals 1128. These computer program products provide software to the computer system 1100. Aspects of the present disclosure are directed to such computer program products.

Computer programs (also referred to as computer control logic) are stored in main memory 1108 and/or secondary memory 1110. Computer programs may also be received via communications interface 1124. Such computer programs, when executed, enable the computer system 1100 to perform the features in accordance with aspects of the present disclosure, as discussed herein. In particular, the computer programs, when executed, enable the processor 1104 to perform the features in accordance with aspects of the present disclosure. Accordingly, such computer programs represent controllers of the computer system 1100.

In an aspect of the present disclosure where the disclosure is implemented using software, the software may be stored in a computer program product and loaded into computer system 1100 using removable storage drive 1114, hard drive 1112, or communications interface 1120. The control logic (software), when executed by the processor 1104, causes the processor 1104 to perform the functions described herein. In another aspect of the present disclosure, the system is implemented primarily in hardware using, for example, hardware components, such as application specific integrated circuits (ASICs). Implementation of the hardware state machine so as to perform the functions described herein will be apparent to persons skilled in the relevant art(s).

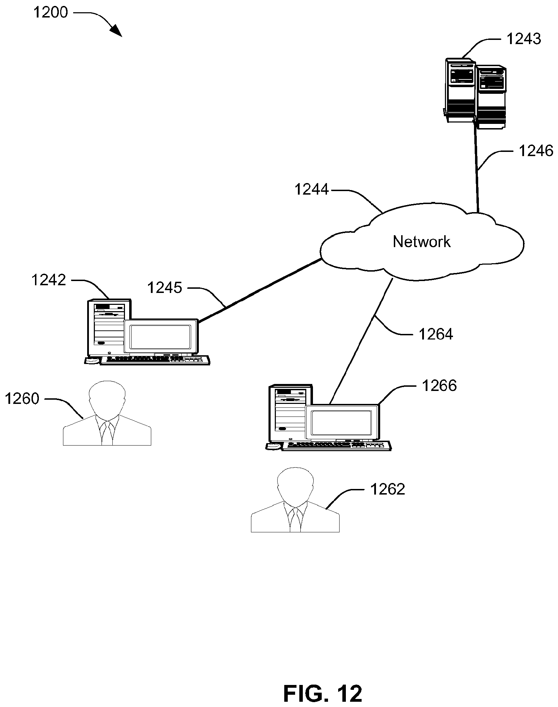

FIG. 12 is a block diagram of various example system components, in accordance with an aspect of the present disclosure. FIG. 12 illustrates a communication system 1200 usable in accordance with aspects of the present disclosure. The communication system 1200 may include one or more accessors 1260, 1262 (e.g., user 150) and one or more terminals 1242, 1266 (e.g., user system 102, computer system 1100). In an aspect, data for use in accordance with aspects of the present disclosure is, for example, input and/or accessed by accessors 1260, 1262 via terminals 1242, 1266, such as personal computers (PCs), minicomputers, mainframe computers, microcomputers, telephonic devices, or wireless devices, such as personal digital assistants ("PDAs") or a hand-held wireless devices coupled to a server 1243 (e.g., collaboration system 106, computer system 1100), such as a PC, minicomputer, mainframe computer, microcomputer, or other device having a processor and a repository for data and/or connection to a repository for data, via, for example, a network 1244 (e.g., network 104), such as the Internet or an intranet, and couplings 1245, 1246, 1264. The couplings 1245, 1246, 1264 include, for example, wired, wireless, or fiber optic links. In another example variation, the method and system in accordance with aspects of the present disclosure operate in a stand-alone environment, such as on a single terminal.

Additional Examples

An example system, comprising: an input device; a memory storing instructions; and one or more processors communicatively coupled with the input device and the memory, the one or more processors configured to: receive ratings data corresponding to a first user from the input device indicating an assessment of the first user during an interpersonal interaction; evaluate the ratings data corresponding to the first user in comparison to ratings data corresponding to a plurality of rated users; and output a result of the evaluated ratings data indicating an evaluation of the first user during the interpersonal interaction.

The above example system, wherein the one or more processors is further configured to: calculate a performance score corresponding to the first user in response to the evaluated ratings data.

One or more of the above example systems, wherein the performance score corresponds to a rating of the first user in relation to one or more users of the system.

One or more of the above example systems, wherein the performance score correlates to any real-world performance metric for the first user that predicts an impact of the first user on a real-world performance.

One or more of the above example systems, wherein the one or more processors is further configured to: identify transitions from a first state of the ratings data to a second state of the ratings data.

One or more of the above example systems, wherein the one or more processors is further configured to: weight each of the transitions from the first state to the second state to indicate a relevance of each of the transitions; and calculate a performance score corresponding to the first user based on weights of the transitions.

One or more of the above example systems, wherein the one or more processors is further configured to: determine one or more characteristics to improve a performance score corresponding to the first user based the result of the evaluated ratings data; and output the one or more characteristics with the result.

One or more of the above example systems, wherein the one or more processors is further configured to: identify one or more positions or groups within an organization for the first user based the result of the evaluated ratings data; and output the one or more positions or groups with the result.

One or more of the above example systems, wherein the one or more processors is further configured to: predictively compute, prior to an end of the interpersonal interaction, a probability of the first user successfully completing the interpersonal interaction based on historical data obtained during historical interpersonal interaction.

An example method for evaluation of interpersonal interaction to predict real world performance, comprising: receiving ratings data corresponding to a first user from a input device indicating an assessment of the first user during an interpersonal interaction; evaluating the ratings data corresponding to the first user in comparison to ratings data corresponding to a plurality of rated users; and outputting a result of the evaluating indicating an evaluation of the first user during the interpersonal interaction.

The above example method, further comprising: calculating a performance score corresponding to the first user in response to the evaluating the ratings data.

One or more of the above example methods, wherein the performance score corresponds to a rating of the first user in relation to one or more users of the system.

One or more of the above example methods, wherein the performance score correlates to any real-world performance metric for the first user that predicts an impact of the first user on a real-world performance.

One or more of the above example methods, wherein the evaluating the ratings data comprises: identifying transitions from a first state of the ratings data to a second state of the ratings data.

One or more of the above example methods, wherein the evaluating the ratings data further comprises: weighting each of the transitions from the first state to the second state to indicate a relevance of each of the transitions; and calculating a performance score corresponding to the first user based on the weighting of the transitions.

One or more of the above example methods, further comprising: determining one or more characteristics to improve a performance score corresponding to the first user based the result of the evaluating; and outputting the one or more characteristics with the result.

One or more of the above example methods, further comprising: identifying one or more positions or groups within an organization for the first user based the result of the evaluating; and outputting the one or more positions or groups with the result.

One or more of the above example methods, further comprising: predictively computing, prior to an end of an interpersonal interaction, a probability of the first user successfully completing the interpersonal interaction based on historical data obtained during historical interpersonal interaction.

An example computer-readable medium storing executable code for executing on one or more processors, comprising code to: receive ratings data corresponding to a first user from an input device indicating an assessment of the first user during an interpersonal interaction; evaluate the ratings data corresponding to the first user in comparison to ratings data corresponding to a plurality of rated users; and output a result of the evaluated ratings data indicating an effectiveness of the first user during the interpersonal interaction.

The above example computer-readable medium of claim 19, further comprising code to: calculate a performance score corresponding to the first user in response to the evaluated ratings data.

As used in this application, the terms "component," "system" and the like are intended to include a computer-related entity, such as but not limited to hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computer device and the computer device may be a component. One or more components may reside within a process and/or thread of execution and a component may be localized on one computer and/or distributed between two or more computers. In addition, these components may execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Various implementations or features may have been presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches may also be used.

The various illustrative logics, logical blocks, and actions of methods described in connection with the embodiments disclosed herein may be implemented or performed with a specially-programmed one of a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computer devices, e.g., a combination of a DSP and a microprocessor, a plurality of microprocessors, one or more microprocessors in conjunction with a DSP core, or any other such configuration. Additionally, at least one processor may comprise one or more components operable to perform one or more of the steps and/or actions described above.

Further, the steps and/or actions of a method or procedure described in connection with the implementations disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An example storage medium may be coupled to the processor, such that the processor may read information from, and write information to, the storage medium. In the alternative, the storage medium may be integral to the processor. Further, in some implementations, the processor and the storage medium may reside in an ASIC. Additionally, the ASIC may reside in a user terminal. In the alternative, the processor and the storage medium may reside as discrete components in a user terminal. Additionally, in some implementations, the steps and/or actions of a method or procedure may reside as one or any combination or set of codes and/or instructions on a machine readable medium and/or computer readable medium, which may be incorporated into a computer program product.

In one or more implementations, the functions described may be implemented in hardware, software, firmware, or any combination thereof. If implemented in software, the functions may be stored or transmitted as one or more instructions or code on a computer-readable medium. Computer-readable media includes both computer storage media and communication media including any medium that facilitates transfer of a computer program from one place to another. A storage medium may be any available media that may be accessed by a computer. By way of example, and not limitation, computer-readable media may comprise non-transitory computer-readable media including RAM, ROM, EEPROM, CD-ROM or other optical disk storage, magnetic disk storage or other magnetic storage devices, or any other medium that may be used to carry or store desired program code in the form of instructions or data structures and that may be accessed by a computer. Disk and disc, as used herein, includes compact disc (CD), laser disc, optical disc, digital versatile disc (DVD), floppy disk and Blu-ray disc where disks usually reproduce data magnetically, while discs usually reproduce data optically with lasers. Combinations of the above should also be included within the scope of computer-readable media.

While implementations of the present disclosure have been described in connection with examples thereof, it will be understood by those skilled in the art that variations and modifications of the implementations described above may be made without departing from the scope hereof. Other implementations will be apparent to those skilled in the art from a consideration of the specification or from a practice in accordance with examples disclosed herein.

**Claims**

1. A system, comprising:

   an input device;
   a memory storing instructions; and
   one or more processors communicatively coupled with the input device and the memory, the one or more processors configured to:

      receive ratings data corresponding to a first user from the input device indicating an assessment of the first user during an interpersonal interaction;
      evaluate the ratings data corresponding to the first user in comparison to ratings data corresponding to a plurality of rated users; and
      output a result of the evaluated ratings data indicating an evaluation of the first user during the interpersonal interaction.

2. The system of claim 1, wherein the one or more processors is further configured to:
   calculate a performance score corresponding to the first user in response to the evaluated ratings data.

3. The system of claim 2, wherein the performance score corresponds to a rating of the first user in relation to one or more users of the system.

4. The system of claim 2, wherein the performance score correlates to any real-world performance metric for the first user that predicts an impact of the first user on a real-world performance.

5. The system of claim 1, wherein the one or more processors is further configured to:
   identify transitions from a first state of the ratings data to a second state of the ratings data.

6. The system of claim 5, wherein the one or more processors is further configured to:

   weight each of the transitions from the first state to the second state to indicate a relevance of each of the transitions; and
   calculate a performance score corresponding to the first user based on weights of the transitions.

7. The system of claim 1, wherein the one or more processors is further configured to:

   determine one or more characteristics to improve a performance score corresponding to the first user based the result of the evaluated ratings data; and
   output the one or more characteristics with the result.

8. The system of claim 1, wherein the one or more processors is further configured to:

   identify one or more positions or groups within an organization for the first user based the result of the evaluated ratings data; and
   output the one or more positions or groups within the organization with the result.

9. The system of claim 1, wherein the one or more processors is further configured to:
   predictively compute, prior to an end of the interpersonal interaction, a probability of the first user successfully completing the interpersonal interaction based on historical data obtained during historical interpersonal interaction.

10. A method for evaluation of an interpersonal interaction to predict real world performance, comprising:

    receiving ratings data corresponding to a first user from a input device indicating an assessment of the first user during the interpersonal interaction;

evaluating the ratings data corresponding to the first user in comparison to ratings data corresponding to a plurality of rated users; and
outputting a result of the evaluating indicating an evaluation of the first user during the interpersonal interaction.

11. The method of claim 10, further comprising:
calculating a performance score corresponding to the first user in response to the evaluating the ratings data.

12. The method of claim 11, wherein the performance score corresponds to a rating of the first user in relation to one or more users involved in the interpersonal interaction.

13. The method of claim 11, wherein the performance score correlates to any real-world performance metric for the first user that predicts an impact of the first user on a real-world performance.

14. The method of claim 10, wherein the evaluating the ratings data comprises:
identifying transitions from a first state of the ratings data to a second state of the ratings data.

15. The method of claim 14, wherein the evaluating the ratings data further comprises:

weighting each of the transitions from the first state to the second state to indicate a relevance of each of the transitions; and
calculating a performance score corresponding to the first user based on the weighting of the transitions.

16. The method of claim 10, further comprising:

determining one or more characteristics to improve a performance score corresponding to the first user based the result of the evaluating; and
outputting the one or more characteristics with the result.

17. The method of claim 10, further comprising:

identifying one or more positions or groups within an organization for the first user based the result of the evaluating; and
outputting the one or more positions or groups within the organization with the result.

18. The method of claim 10, further comprising:
predictively computing, prior to an end of the interpersonal interaction, a probability of the first user successfully completing the interpersonal interaction based on historical data obtained during historical interpersonal interaction.

19. A computer-readable medium storing executable code for executing on one or more processors, comprising code to:

receive ratings data corresponding to a first user from an input device indicating an assessment of the first user during an interpersonal interaction;
evaluate the ratings data corresponding to the first user in comparison to ratings data corresponding to a plurality of rated users; and
output a result of the evaluated ratings data indicating an effectiveness of the first user during the interpersonal interaction.

20. The computer-readable medium of claim 19, further comprising code to:
calculate a performance score corresponding to the first user in response to the evaluated ratings data.

FIG. 1

FIG. 2

300

FIG. 3

FIG. 4

| | Avatars | Learner | | | Learner | Learner |
|---|---|---|---|---|---|---|
| Correlation found: | ssfformant | lnsdpitch | | Correlation found: | lis time | pauses |
| Correlation found: | lis time | lis time | | Correlation found: | lis time | mn int |
| Correlation found: | lis time | spk time | | Correlation found: | spk time | art rate |
| Correlation found: | lis time | pauses | | Correlation found: | spk time | mn int |
| Correlation found: | lis time | mn int | | Correlation found: | spk time | sd_pch |
| Correlation found: | lis time | sd_pch | | Correlation found: | art rate | mn int |
| Correlation found: | spk time | mn int | | Correlation found: | art rate | sd_pch |
| Correlation found: | art rate | mn int | | Correlation found: | mn pitch | mn_ffmnt |
| Correlation found: | art rate | sd_pch | | Correlation found: | mn pitch | rms rdot |
| Correlation found: | mn_ffmnt | sd_pch | | Correlation found: | mn pitch | std rdot |
| | | | | Correlation found: | mn int | sd_pch |
| | | | | Correlation found: | energy | rms rdot |
| | | | | Correlation found: | energy | rms ydot |
| | | | | Correlation found: | energy | std rdot |
| | | | | Correlation found: | rms rdot | rms ydot |
| | | | | Correlation found: | rms rdot | std rdot |
| | | | | Correlation found: | rms pdot | std pdot |
| | | | | Correlation found: | rms ydot | std rdot |

FIG. 5

FIG. 6

FIG. 7

FIG. 8

EP 4 020 352 A1

**FIG. 9**

EP 4 020 352 A1

1000

Receiving ratings data corresponding to a first user from a input device indicating an assessment of the first user during an interpersonal interaction —1002

Evaluating the ratings data corresponding to the first user in comparison to ratings data corresponding to a plurality of rated users —1004

Outputting a result of the evaluating indicating a social effectiveness of the first user during the interpersonal interaction —1006

**FIG. 10**

1100

**FIG. 11**

1200

1243

1246

1244

Network

1245

1242

1264

1260

1266

1262

**FIG. 12**

Europäisches
Patentamt

European
Patent Office

Office européen
des brevets

# EUROPEAN SEARCH REPORT

**Application Number**

**EP 21 21 5045**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/171798 A1 (MURSION INC [US]) 27 August 2020 (2020-08-27) * page 3, paragraph 1 - paragraph 2 * * page 4, paragraph 5 * ----- | 1-20 | INV. G06Q10/06 |

**TECHNICAL FIELDS SEARCHED (IPC)**

G06Q

The present search report has been drawn up for all claims

| Place of search | Date of completion of the search | Examiner |
|---|---|---|
| Munich | 8 April 2022 | Hanon, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 5045

08-04-2022

| Patent document cited in search report | | Publication date | Patent family member(s) | | Publication date |
|---|---|---|---|---|---|
| WO 2020171798 | A1 | 27-08-2020 | CA | 3130573 A1 | 27-08-2020 |
| | | | EP | 3928222 A1 | 29-12-2021 |
| | | | US | 2022021716 A1 | 20-01-2022 |
| | | | WO | 2020171798 A1 | 27-08-2020 |

EPO FORM P0459

For more details about this annex : see Official Journal of the European Patent Office, No. 12/82